# EUROPEAN PATENT SPECIFICATION

(11) **EP 0 555 314 B1**
(45) Date of publication and mention of the grant of the patent: **06.05.1998**
(21) Application number: 91919517.2
(22) Date of filing: 16.09.1991
(51) Int. Cl.: B66F 11/00

(54) **CAMERA DOLLY**
KAMERAWAGEN
CHARIOT DE CAMERA

(30) Priority: 01.10.1990 US 591524; 01.10.1990 US 591525; 17.04.1991 US 686823
(43) Date of publication of application: 18.08.1993
(60) Divisional application: 97106153.6
(73) Proprietor: Chapman, Leonard T., North Hollywood, California 91605 (US)
(72) Inventor: Chapman, Leonard T., North Hollywood, California 91605 (US)
(74) Representative: Senior, Alan Murray
(86) International application number: US9106708
(87) International publication number: WO9206034

(56) References cited:
- CH-A- 447 839
- DE-A- 1 555 048
- JP-A-61 256 055
- SU-A- 977 370
- US-A- 2 842 376
- US-A- 4 003 584
- US-A- 4 094 484
- US-A- 4 257 619
- US-A- 4 337 845
- US-A- 4 757 970
- US-A- 4 910 126

## Description

### TECHNICAL FIELD OF THE INVENTION

The application relates to the field of mobile wheeled equipment and specifically to camera dollies and cranes used in the television and motion picture industries. In the production of television programs or motion pictures, it is often necessary to maneuver a camera between different filming positions. The required camera movement may include elevating and lowering the camera as well as lateral and longitudinal movement between the camera and subject. Continuous translation of the camera, i.e., to follow an action or moving sequence is also occasionally called for. Camera cranes and dollies are employed to support the camera and perform the desired camera movement.

For filming in close quarters, a compact camera dolly is desired. For example, to fit through narrow doorways, the length and width of the camera dolly should be limited. With the advent of widespread "on location" filming, the camera dolly may have to be hand carried, e.g., up narrow stairways, across uneven outdoor terrain, etc. Accordingly, it is desirable for the camera dolly to be lightweight and easily carried.

It is important for the camera dolly to provide a stable platform for the camera, both at rest and when moving, since any shock, vibrations, jarring or rocking imparted by the dolly will cause the recorded film or video image sequence to "jump" unacceptably. Consequently, the dolly structure must be rigid and secure. The camera dolly should preferably also be capable of readily supporting not only a camera of substantial weight, but also a camera operator and a second individual such as a cinematographer, director, lighting specialist, etc. Preferably, the camera dolly is able to quickly, but silently and smoothly translate, rotate and elevate the camera. Quiet operation of all aspects of dolly movement, such as rolling, steering, turning and elevating or lowering a camera is especially important during the production of live television wherein even intermittent low or muffled equipment noise can be disruptive.

For added versatility, the camera dolly should be capable of both conventional steering and crab steering.

In conventional steering, typically the front wheels remain fixed and the rear wheels steer. In crab steering, all of the dolly wheels are steered together, thereby permitting the dolly to be moved in any direction. In certain filming sequences, it is necessary to shift between conventional and crab steering modes. This shifting must be performed quickly and smoothly. In addition, the camera dolly operators or dolly grips must continue to smoothly push the dolly while steering mode shifting is made, during a filming sequence. This can be difficult because shifting has heretofore required a free arm or leg to actuate a shift handle or lever and because shifting can only occur when the wheels are properly aligned.

In conventional steering, to maintain acceptable steering performance while the dolly is steered on a curved path, a conventional steering corrector or transmission is required. The corrector adjusts the steering angle of the camera dolly wheels to allow the camera dolly to properly track a curved path. This prevents any scraping or scrubbing of the wheels against the floor or supporting surface which would tend to vibrate and disturb the camera and filming sequence as well as increasing rolling friction or resistance.

For translational filming sequences over uneven surfaces, for example on outdoor terrain, track rails can be laid to provide a smooth rolling surface for the camera dolly. The camera dolly should accordingly be able to be quickly and easily set up for use on track rails.

Both three-wheel and four-wheel camera dollies or three-corner pedestals have been proposed and used in the past (generally having dual wheels at each corner). Three-wheel configurations are advantageous as they are stable, i.e. a tripod configuration, even on uneven ground. However, three-wheel dollies or pedestals are not well suited for operation on track or allowing for passage through narrow doorways without incurring unacceptable levels of "tilt line" stability. Four-wheel camera dollies can perform well on track and have much larger wheelbase ranges but can be less stable than three-wheel units. Consequently, heretofore, there have been tradeoffs to be weighed in selecting a three-wheel or a four-wheel design.

Various camera dolly and camera pedestals have been proposed in the past. See, for example, Zelli, US-A-4 003 584; Galione, US-A-4 094 484 and Nakazawa, US-A-4 757 970. However, the present camera dolly/pedestal achieves performance and characteristic advantages.

Accordingly, it is an object of the invention to provide an improved camera support.

According to the present invention there is provided a steering compensator comprising:
a shaft having a first shaft section, a central shaft section offset from the first shaft section and a second shaft section offset from the first and central shaft sections;
a first drive member rotatably attached to the first shaft section;
a second drive member rotatably attached to the second shaft section;
a central member rotatably attached to the central shaft section between the first and second drive members and
means for pivotally linking said first and second drive members to allow relative angular displacement between them.

In one embodiment an improved camera dolly has a novel steering compensator using an offset shaft. First and second sprockets are pivotally attached to the offset shaft. A central disk is pivotally attached to a central offset shaft section in between the first and second sprockets. A pivotal link connects the first and second sprockets, through the central disk, to allow relative angular displacement between the sprockets.

In adjustable steering compensators, eccentric cams may be rotatably mounted on an offset shaft and are actuated by a knob or lever on the dolly top deck, to vary the offset spacing between the sprockets. The adjustable steering compensators provide accurate steering angle compensation for all required dolly leg configurations.

According to another aspect of the present invention, there is provided a steering wheel angle corrector comprising:
an offset hub having a first leg joined to a first side of a centre section and a second leg joined to a second side of the centre section opposite the first side and offset from the first leg;
a first cam pivotally supported about the first leg of the offset hub;
a second cam pivotally supported about the second leg of the offset hub;
a first sprocket supported on the first cam;
a second sprocket supported on the second cam;
a disk rotatably supported about the centre section of the offset hub in between the first and second sprockets;
a link slidably extending between the first and second sprockets and through the disk;
a gear post having a first end and a second end extending through the first leg of the offset hub;
a means for turning the gear post, disposed on the first end of the gear post;
a first gear on the second end of the gear post; and
a second gear on the second cam engaged with the first gear, such that movement of the means for turning causes the first cam to turn and the second cam to turn simultaneously by an equal amount in an opposite direction.

According to yet another aspect of the present invention there is provided a camera dolly having a compensator or corrector as mentioned above.

The invention will be further described by way of non-limitative example, with reference to the accompanying drawings, wherein similar reference characters denote similar elements throughout the several views, and in which:-
Figure 1 is a perspective view of a camera dolly/pedestal incorporating the present invention, with the column of the pedestal fully extended;
Figure 1A is a left side elevation view of the camera dolly and pedestal supporting a camera;
Figure 1B is a side view of the pedestal separated from the dolly and standing on the floor;
Figure 2 is a schematically illustrated top view of the dolly of Figure 1 with the camera platform and steering wheel removed and showing the steering system;
Fig. 3 is a section view fragment of the rear left leg and chassis section of the dolly taken along line 3-3 of Fig. 2, illustrating the crab-conventional steering shift apparatus;
Fig. 4 is a partial section view of the back end of the dolly of Fig. 2 further illustrating the shift apparatus and steering drive system;
Fig. 5 is an exploded perspective view of a leg of the camera dolly showing the leg belt tensioning apparatus and kingpin;
Fig. 6 is a section view fragment of the right rear leg and chassis, taken along line 6-6 of Fig. 2;
Fig. 7 is a schematic illustration of the steering system;
Fig. 8 is a schematic illustration of the dolly chassis with a steering bracket accessory installed;
Fig. 9 is a section view of the steering angle corrector;
Fig. 10 is a top view thereof;
Fig. 11 is a side elevation view fragment in part section of a leg locking system;
Figs. 12A and 12B are geometric constructions of the steering correction provided by the corrector shown in Fig. 10;
Fig. 13 is a section view of a second embodiment of the steering corrector;
Fig. 14 is a section view of a third embodiment of the steering corrector;
Fig. 15 is an exploded perspective view of the corrector of Fig. 14;
Fig. 16 is a partial section view of an alternate embodiment of the steering corrector of Fig. 14;

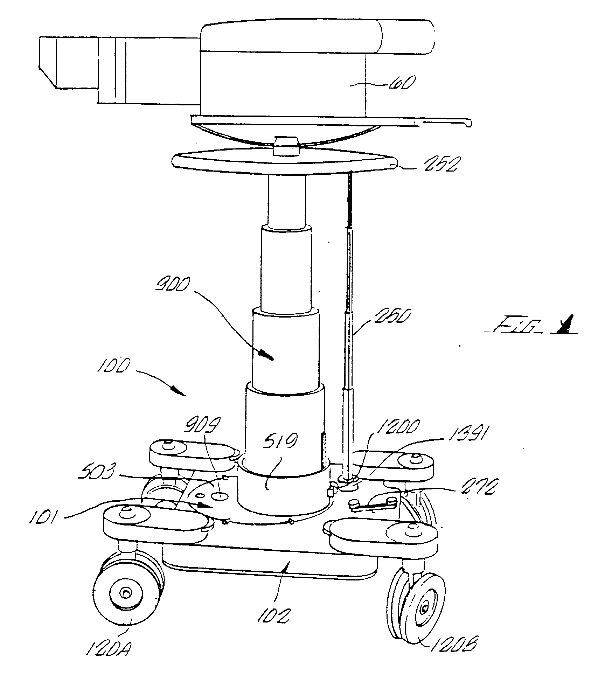

As shown in Figs. 1 and la, which are useful for understanding the invention, a television or motion picture camera 60 is mounted on to a dolly/pedestal unit 100 comprising a dolly 102 and a separable pedestal 101.

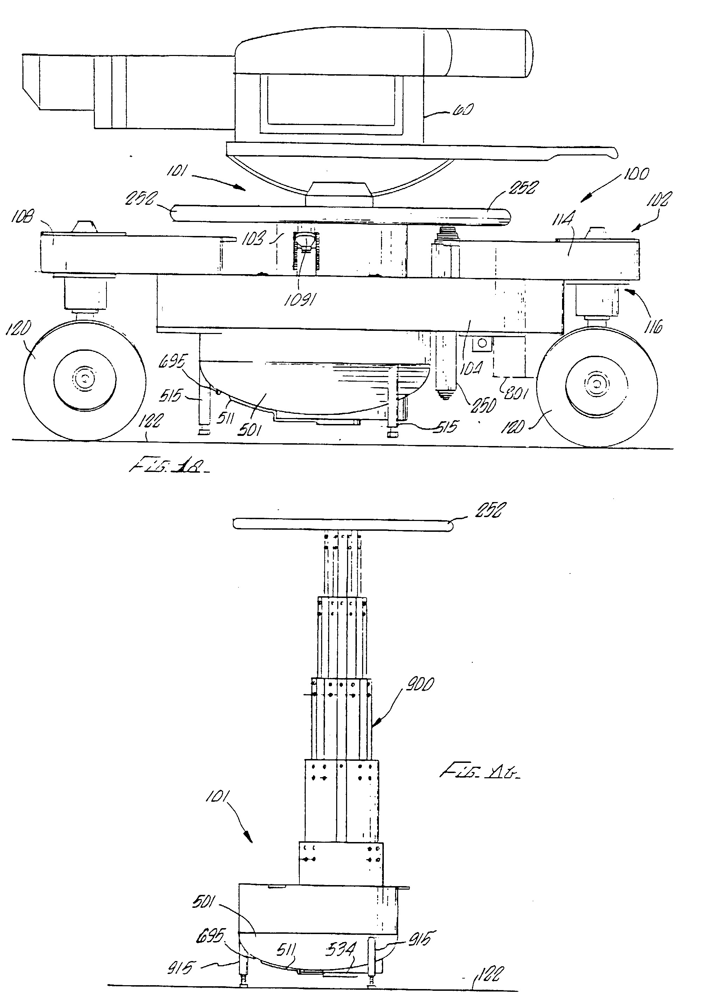

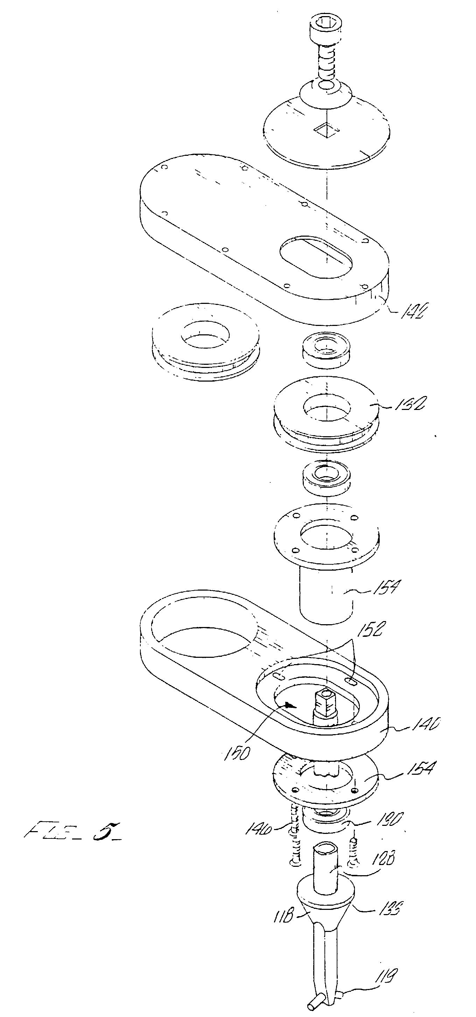

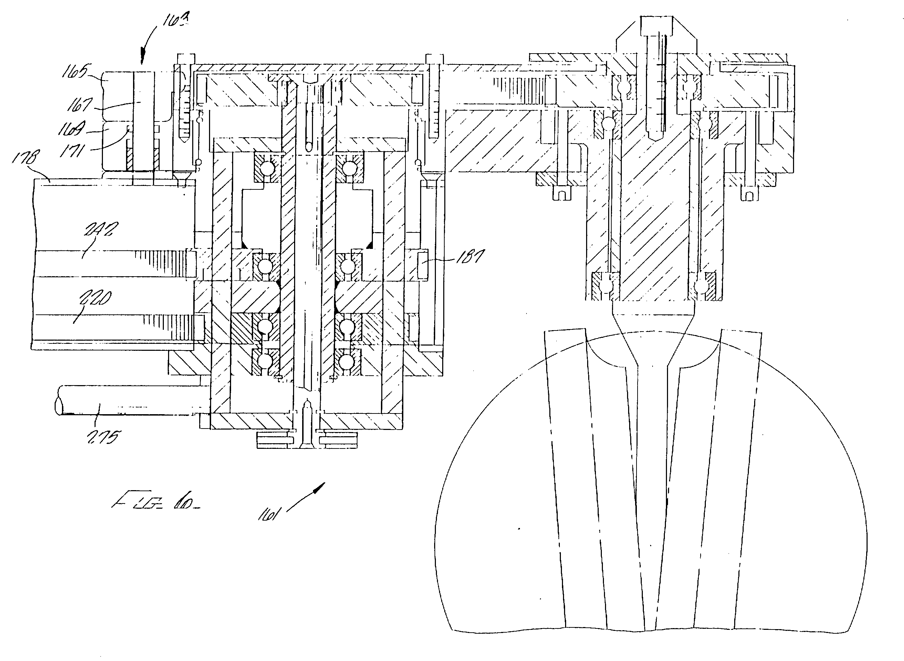

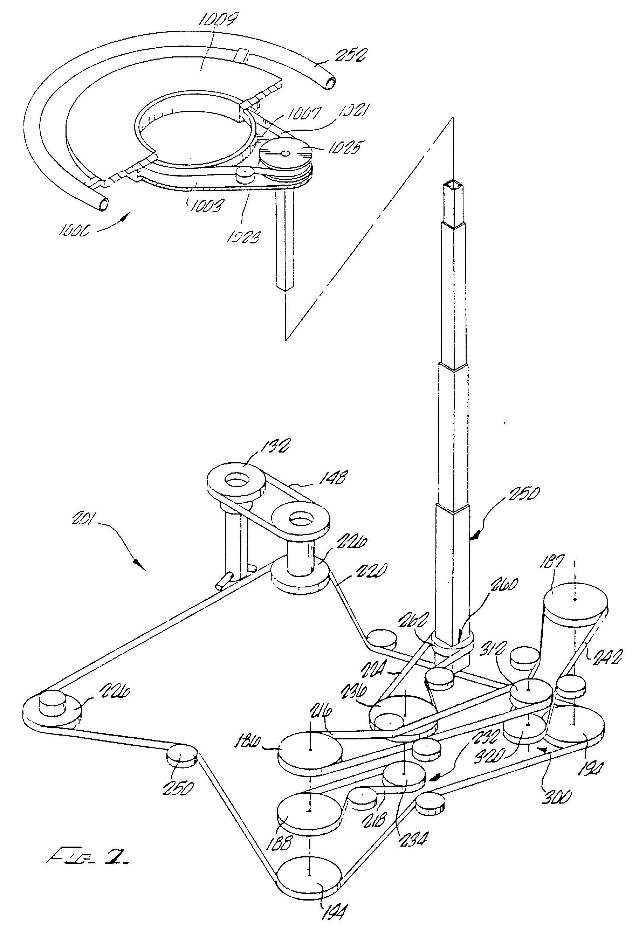

The dolly 102 includes a dolly chassis 104 having a generally round pedestal opening 106 (Figs. 2 and 8) extending through the dolly chassis 104 for receiving and supporting the pedestal 101. Three or four recessed mounting positions with threaded holes are provided around the opening 106 for accepting and securing the pedestal 101 into the dolly 102, while maintaining a generally flat dolly deck surface. Referring to Fig. 2, pivotally attached to the dolly chassis 104 are chassis legs, described herein as the front left leg 108; the front right leg 110; the rear right leg 112; and the rear left leg 114. The rear legs 112 and 114 can be pivoted on the dolly chassis 104 into leg positions A, B, and C. Similarly, the front legs 108 and 110 may be pivoted into leg positions D, E and F. Other leg positions may also be used.

With the rear dolly legs in position B and the front dolly legs in position D, the dolly is in the straight ahead or narrowest width dolly configuration. With the rear dolly legs in position C and the front dolly legs in position E, the dolly is in the track position, i.e., the dolly is configured to roll on standard track having 24.56 inch (62.38 cm) centers. With the rear dolly legs in position A and the front dolly legs in position F, the dolly is in a simulated three-point suspension configuration, i.e., the camera dolly approximates a tripod suspension.

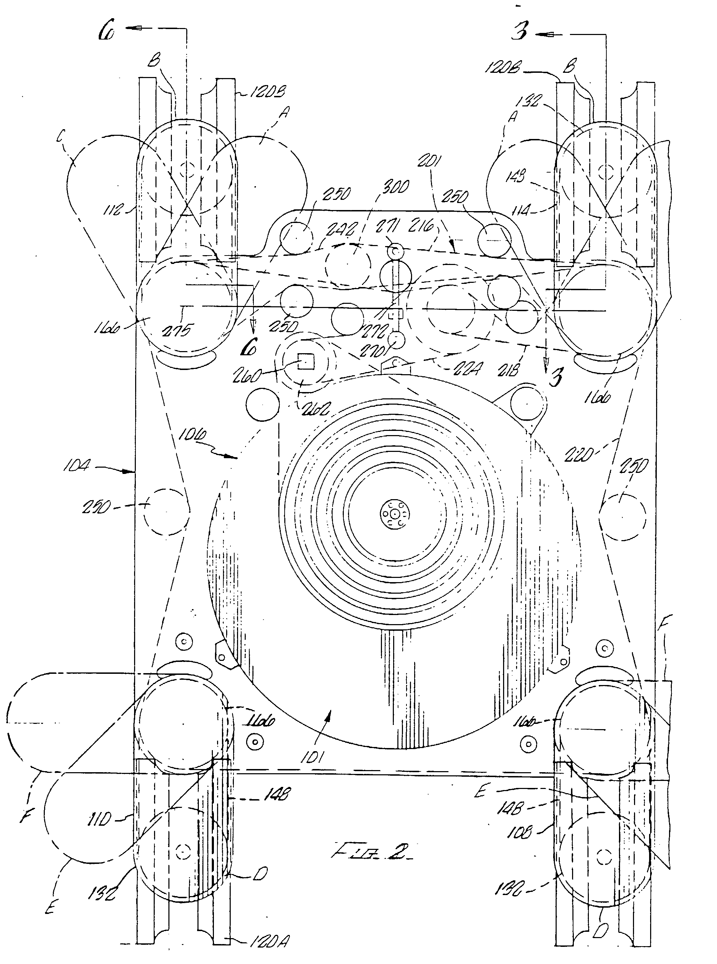

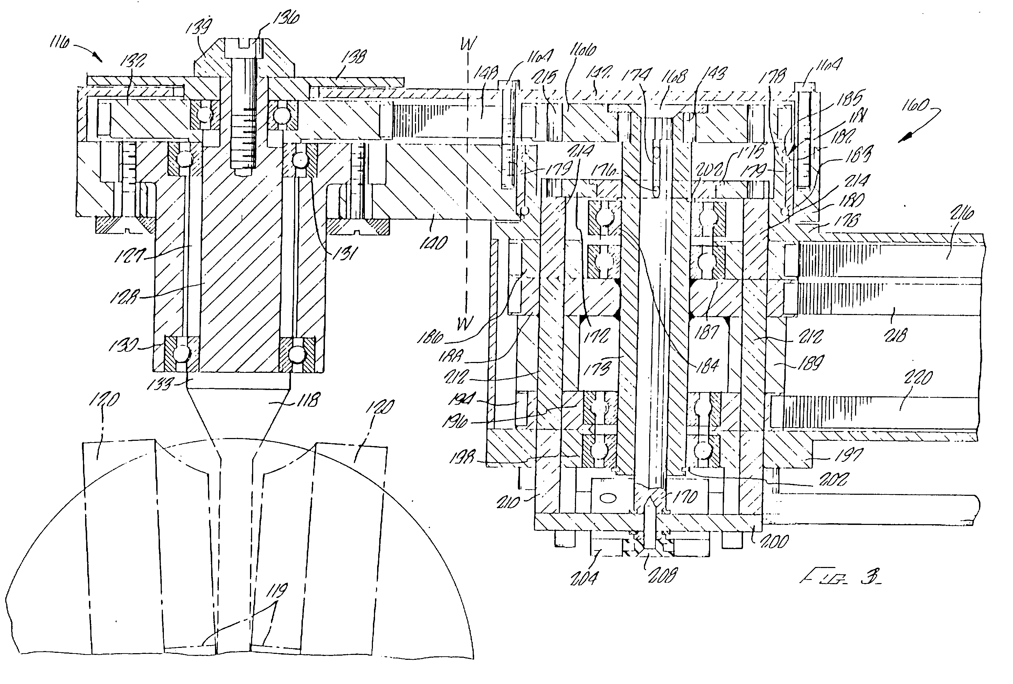

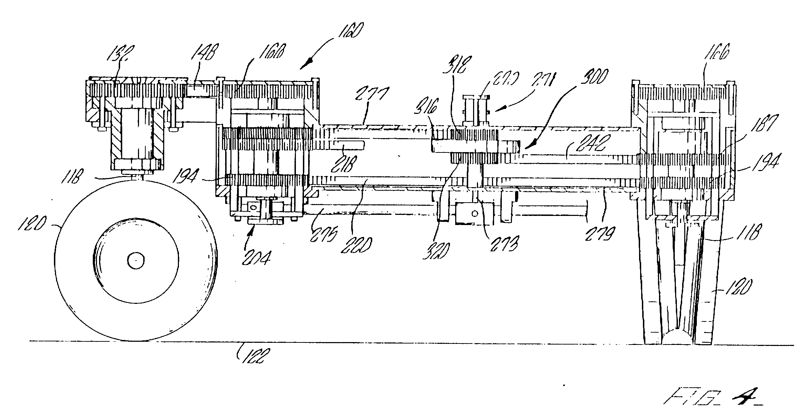

Referring to Fig. 3, the left rear-wheel king pin assembly 116 is described herein in detail. (The wheel king pin assembly 116 generally comprises the structure to the left of line W-W in Fig. 3). The other wheel assemblies on the dolly 102 will have similar construction. A king pin 118 includes axles 119 extending at a dihedral angle. Wheels 120 are rotatably mounted on the axles 119. The wheels 120 are configured to roll either on the ground 122 or on a standard industry track rail. A king pin shaft 128 extends through a king pin shaft bearing 130 supported by a king pin ferrule 133. A spacer sleeve 127 spaces apart bearings 130 and 131 separating the bearings slightly more than the housing shoulder dimensions. A king pin sprocket 132 is mounted over a king pin sprocket bearing 134 on the king pin shaft 128. A wheel assembly steering locking bolt 136, preferably a socket head cap screw, extends through a cover plate 138 into a threaded hole in the top end of the king pin shaft 128. Cap 139 bears upon the cover plate 138 held by the locking bolt 136. As shown in Fig. 5, orientation of the plate 138 and its rotation is determined by the square end of the shaft 128 and the corresponding square hole in the plate 138. When the locking bolt 136 is tightened into the king pin shaft 128 the cap 139 causes the cover plate 138 and king pin sprocket 132 to lock against and rotate with the king pin shaft 128. Locking bolt 136 is loosened to align the wheel assembly and then retightened.

To align the wheel assembly, the wheels are steered to a straight ahead position. The cover plate 138 has three grooves or markings corresponding to the three leg settings. With the locking bolt 136 loosened, the king pin 118 is turned to align the appropriate marking on the cover plate 138 with a reference mark on the upper leg frame 142. The locking bolt 136 is then retightened.

Each leg 108, 110, 112 and 114 comprises a lower leg frame 140 and an upper leg frame 142. As shown in Fig. 5, the lower leg frame 140 has an elongated or oval opening 150 and slotted holes 152 for securing the king pin armature 154 to the lower leg frame 140. The slotted holes 152 allow the king pin armature 154 to be slidably positioned to adjust the appropriate tension in the leg belt 148. The king pin ferrule 133 is clamped into position using clamping bolts 146 after the position of the king pin ferrule 133 has been adjusted for proper tensioning of the leg belts, e.g. belt 148. Spacer sleeve 127 is of correct length to prevent the alignment clamping forces to be placed on the bearing balls thus preventing added friction.

As shown in Fig. 3, in a left shift assembly 160, the upper leg frame 142 is secured to an outer bearing frame 180 by bolts 164 internally lined with a hardened sleeve 179. Within the left steering shift assembly 160 is a leg drive sprocket 166 linked by belt 148 to the king pin sprocket 132 (See Fig. 2 also). A cap screw 168 secures the leg drive sprocket 166 to a tubular axle 173 extending substantially vertically throughout the steering shift assembly 160. Dowel pins 143 finalize the attachment. An upper plate 172 is vertically slidable by way of a slot 174 on the shaft 170 by a pin 176.

A hardened inner bearing frame 178 pivotally supports the leg 114 (and legs 108, 110, and 112) on the dolly chassis 104. The outer bearing frame 180 with the hardened sleeve 179 is fitted over the inner bearing frame 178 to form the bearing to pivotally mount the leg 114. Balls 182 are positioned within upper and lower annular openings 181 and 183 formed by the inner bearing frames 178 and the hardened sleeve 179 on the outer bearing frame 180.

Since the outer bearing frame 180 is a structural member of the dolly, the shift assembly 160 can be made lightweight and compact. Seals 185 maintain lubricant within the bearings and keep contaminants out.

Referring still to Fig. 3, a conventional steering sprocket 186 is rotatably mounted on the axle 173 by a bearing 187. Similarly, a crab sprocket 194 is rotatably mounted on the axle 173 by crab sprocket bearings 196. A shaft drive sprocket 188 is irrotatably mounted on and fixed to the axle 173. A drive sleeve 189 is welded to the drive sprocket 188 and to the crab sprocket 194, or the sleeve 189 and sprockets 188 and 194 can be a single piece unit. Plate bearings 184 and 198 support the axle 173 within the inner bearing frame 178 and lower support plate 197. Retaining rings 202 secure the axle 173 vertically within the shift assembly 160 on the inner races of bearings 198 and 184. A lower plate 200 is secured to the lower end of the shaft 170 by cap screw 2G8. Lower shift pins 210 resting against the lower plate 200 extend through the lower support 197 and butt against middle shift pins 212 which extend through holes in the crab steering sprocket 194 and drive sprocket 188. Upper shift pins 214 rest against the middle shift pins 212 and extend through the conventional steering drive sprocket 186. The upper ends of the upper shift pins 214 are secured to the upper plate 172 which can rotate on a disc 175 that is secured to axle 173 by a pin 176. The shift pins 210, 212 and 214 preferably have tapered ends so that they can drive into and align the sprockets even when the holes in the sprockets are not yet perfectly aligned. This provides a larger "shifting window" in time, for shifting steering modes. As shown in Fig. 3, 2 sets of shift pins are provided 180° apart.

A pivoting fork shift assembly 204 allows the lower plate 200 to be shifted from a lower or crab steering position (as shown in Fig. 3) wherein the middle shift pins 212 cause the drive sprocket 188 to be mechanically linked to the crab steering sprocket 194 -- to implement crab steering; to a second or conventional steering position wherein the lower plate 200 is shifted upwardly such that the crab sprocket 194 is mechanically linked to the fixed lower support 197 by the lower shift pins 210, and wherein the middle shift pins 212 cause the drive sprocket 188 to link up with and rotate with the conventional steering sprocket 186 -- to implement conventional steering. Thus, with the shift assembly 160 shifted into the crab steering mode, the drive sprocket 188 turns with the crab sprocket 194, while the conventional steering sprocket 186 remains fixed. On the other hand, with the shift assembly 160 shifted into the conventional steering mode, the crab sprocket 194 remains fixed while the conventional steering sprocket 186 rotates with and is driven by the drive sprocket 188. Poke holes 215 through sprocket 166 and plate 172 allow the shift pins to be pushed out of the shift assembly 160 during maintenance.

As shown in Fig. 6, a second or right side steering shift assembly 161 is provided at the right rear of the dolly 102. However, this shift assembly 161, although similar to shift assembly 160, does not include a shaft drive sprocket 188.

The front legs 108 and 110 do not include or require any steering shift mechanism or a conventional steering drive sprocket, since the front wheels of the dolly are either in a fixed "straight ahead" position or are engaged in the crab steering mode. The front wheels of the dolly do not require or perform conventional steering correction as do the rear wheels. Referring to Figs. 3 and 4, the dolly 102 can be shifted from conventional steering to crab steering and vice versa by actuation of a shift rocker 272 having knobs 270 and 271. With the shift knob 270 in the "up" position as shown in Fig. 4, the lower plate 200 in both the left and right shift assemblies 160 and 161 are in the lower or crab position such that the conventional steering sprockets 186 and 187 are deactivated and the crab sprockets 194 and 195 are driven by the steering system 201. With the shift knob 271 in the "up" position, the plates 200 in the shift assemblies 160 and 161 are displaced upwardly such that the crab sprockets 194 and 195 are deactivated and the conventional steering sprockets 186 and 187 come into play.

As shown in Fig. 4, the conventional shift knob 270 and the crab shift knob 271 are on the rocker 272 linked to an extension shaft 273 extending through the dolly chassis to an arm linkage joined to a pivot shaft 275. The ends of the pivot shaft 275 are attached to a fork assembly 204 at the left and right shift assemblies 160 and 161. The fork assemblies 204 are pivotally joined to the (vertical) shafts 170 in the shift assemblies 160 and 161. Consequently angular rotation of the shaft 275 causes the vertical shafts 170 to shift between conventional and crab steering modes. As shown in Fig. 2, the shaft 275 is positioned between the crab and conventional steering knobs 271 and 270. As one knob is depressed, the other is raised on the rocker 272 fixed to the top deck, as the dolly is shifted between conventional and crab modes. The rocker is preferably operated by foot.

Thus, the steering shift assembly 160 and 161 allows the dolly 102 to be shifted from conventional steering, i.e., wherein the front wheels of the dolly would remain fixed in a "straight ahead" position with the rear wheels performing the steering, to a crab steering mode wherein all wheels remain parallel to each other and in the same direction, such that the dolly can "crab".

Figures 2 and 7 illustrate the steering system 201 of the dolly unit 102. As shown therein, the crab belt 220 continuously loops around and drivingly engages the crab sprockets 194 and front chassis sprockets 226, all of which are contained within the dolly chassis 104. The front chassis sprockets 226 are fixed to a shaft which drives the drive sprockets 106 in the front legs 108 and 110. Idler pulleys 250 are provided along the sides of the chassis for tensioning the crab belt 220. All of the belts in the steering system 201 are toothed rubber belts and have a flat back surface, such as Gates Rubber Co. POLYCHAIN GT belts.

A primary sprocket 262 has a through square receptacle 260 adopted to receive a telescoping steering drive shaft 250 linked to the steering assembly of the pedestal, as further described below. A first ratio belt 224 drivably connects the primary sprocket 262 to an outer or second sprocket 236 on a two stage idler 232. A first or inner sprocket 234 of the two stage idler 232 is linked by the drive belt 218 to the shaft drive sprocket 188, as shown in Fig. 3. The conventional steering sprocket 186 is connected by the left conventional steering belt 216 to a steering corrector unit 300, and specifically to a first sprocket 312 on the corrector 300. A second sprocket 320 on the corrector 300 is linked by a right side conventional steering belt 242 to a right side conventional steering sprocket 187 within a right side shift assembly 161, as shown in Fig. 6. Idler pulleys are provided as shown in Fig. 2 to provide proper belt tensioning and for alignment purposes during manufacture or maintenance.

The sprockets in the steering system are selected so that the wheels 120 of the dolly will move directly and with the same turning angle as the steering wheel 252 on the pedestal. These ratios can be achieved by using 8M22 sprockets for sprockets 262, 234, 312, and 320; 8M40 sprockets for sprockets 132, 166, 226 and 194; 8M44 sprockets for sprockets 186, 188 and 236 are also available from Gates Rubber Co. (the last 2 digits indicating the number of sprocket teeth). The initial drive reduction is 112 ö 28 = 4. The corresponding drive increase is (44 ö 22) (2) = 4. The ratio between the steering wheel and the wheels, therefor, is 1 to 1. These sprockets can be machined down in height to maintain a compact and streamlined dolly chassis. Use of these sprockets with the Gates POLYCHAIN GT belts provides for exceptionally precise movement and handling of the steering system 201 which is very noticeable and desirable to the dolly grip or user. This steering system is also very quiet in operation permitting it to be freely used on sound stages without interfering with the audio aspects of television or motion picture production. Although the present embodiment uses toothed belts, chains, if made suitably quiet, could also be used.

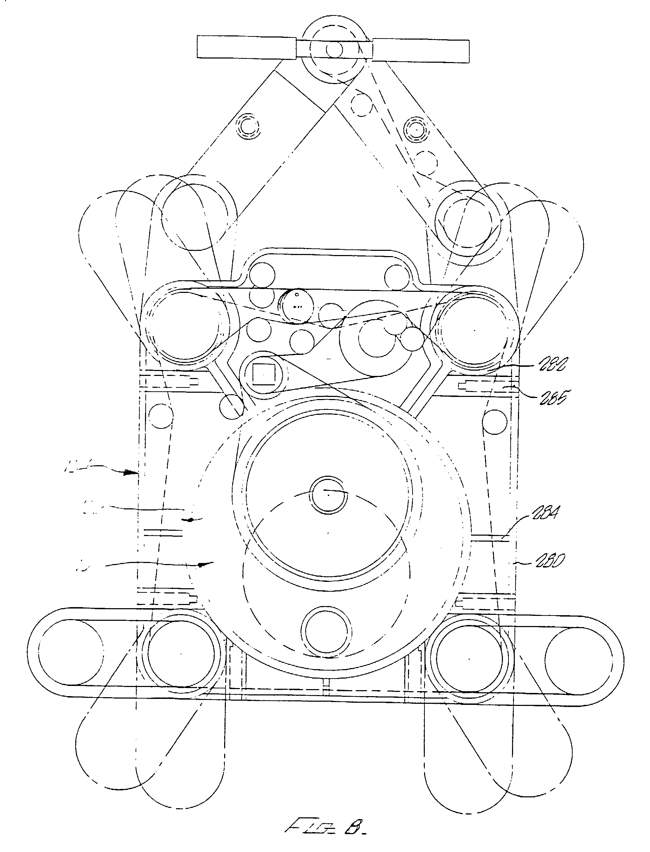

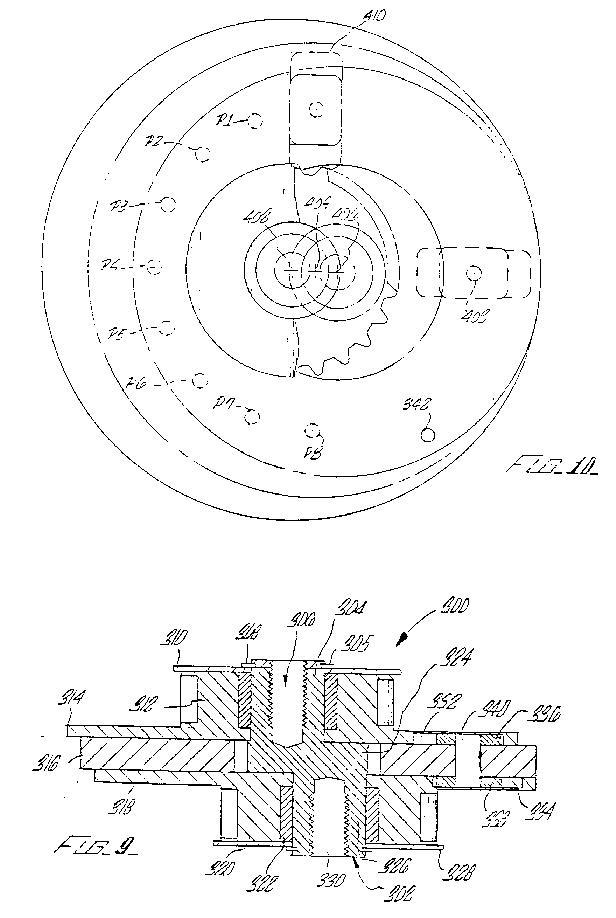

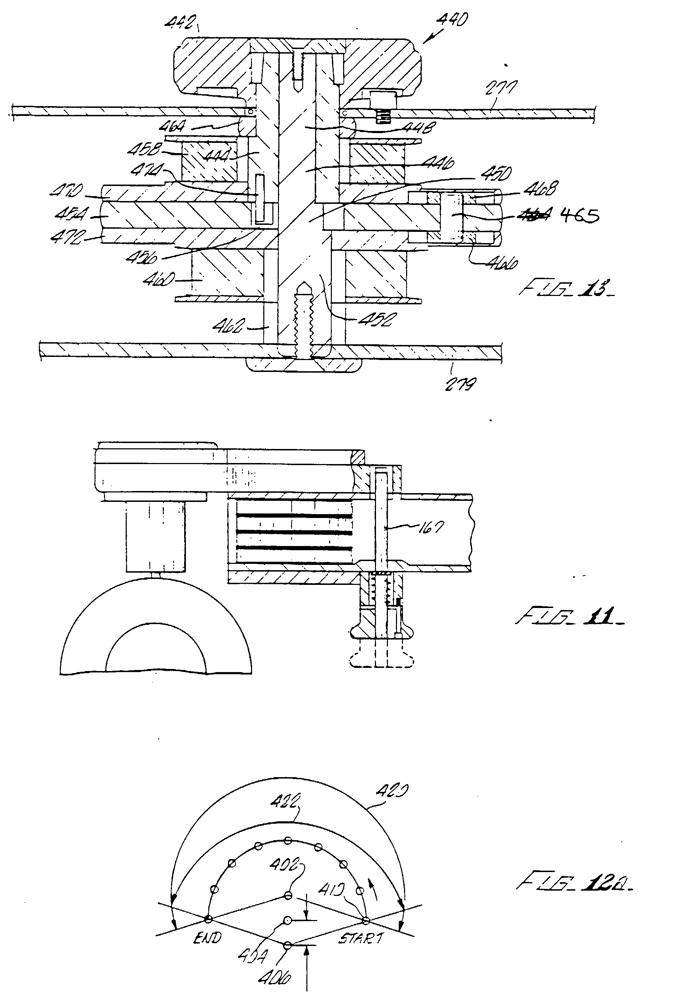

A leg locking pin system 163 is provided for each leg to lock the leg into its selected position. As shown in Fig. 6, a crescent shaped handle 165 is joined to a pin 167 in a pin frame 169. A bushing or O-ring 171 in the frame 169 surrounds the pin 167 and provides damping to its movement. The pin 167 is releasably engageable through a bore in a flange of the hardened innerbearing frame 178 overlying the dolly chassis. An alternative arrangement, operated from underneath the dolly chassis, is shown in Fig. 11.

As shown in Figs. 3, 4, 7 and 8, the dolly chassis may be made as generally square or rectangular weldment with removable top and bottom plates 280 and 282 spaced apart by the frame 277, tubes 279, and ribs 284 (Fig. 8). Accessory pockets 285 are provided at the front and sides of the chassis to hold seats, platforms, pushbars, etc.

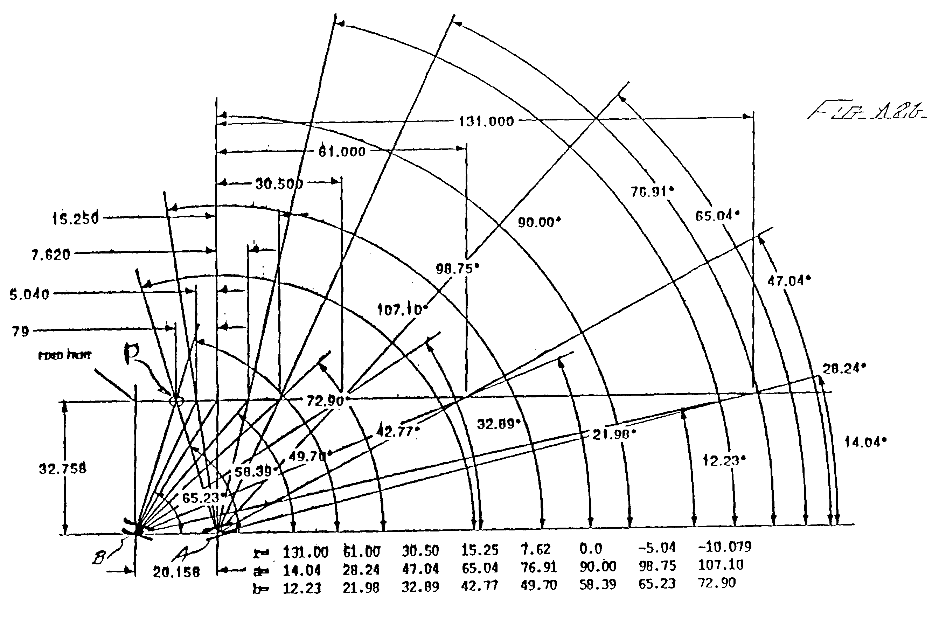

As is well known in the art, to achieve proper steering geometry with conventional steering, the rear wheels must be oriented so that their axes (i.e., a line perpendicular to the wheels and colinear with the axles) intersect at a point -on a line passing through the centerlines of the front wheels. To the extent the rear wheels deviate from this geometry, rolling friction will be increased due to scrubbing of the wheels on the floor surface. This principle is illustrated schematically in Figure 12B which shows steering angle correction for the dolly 102 when the legs 108, 110, 112, and 114 are in front and rear leg positions E-B and F-A as shown in Figure 2. As shown in Figure 12B, the steering correction required in conventional steering of the rear wheels ranges from 0.0 when the dolly 102 is steered to move in a straight line, to a maximum 107.10° for the right rear wheel when the dolly is steered to pivot around point P in Figure 12B. The left and right rear wheels in Fig. 12B are designated by A and B. As shown, wheels B turn 72.9° to meet point P.

A steering corrector or transmission unit 300 according to the invention sets the proper relative angles of the rear wheels to achieve proper steering geometry. As shown in Fig. 9, the corrector unit 300 includes an eccentric hardened shaft 302 having an upper or first shaft section 304, a central section 324 and a lower or second shaft section 326 offset from the first shaft section 304. A threaded bore 306 extends into the first shaft section 304. Correspondingly, a threaded bore 330 extends into the second shaft section 326. A top sprocket 312 is rotatably mounted onto the first shaft section 304 through a needle bearing 308. A belt flange 310 is integral with the top sprocket 312 and the top sprocket is held onto the first shaft section 304 by a snap ring 305. A top plate section 314 is rigidly attached to or integral with the top sprocket 312. Similarly, a bottom sprocket 320, of the same size and pitch as the top sprocket 312 is rotatably mounted on the second shaft section 326 by a bearing 322. A belt flange 328 is integral with the bottom sprocket 320 which is held onto the second shaft section 326 by a snap ring 327. A lower plate 318 is rigidly attached to or integral with the bottom sprocket 320. A correction disk 316 is rotatably mounted on the central section 324 of the eccentric shaft 302 on a Glacier DU bushing or suitable alternate and between the upper plate 314 and lower plate 318.

The top plate 314 section includes a radial slot 332 containing an upper dog plate 336. Similarly, the lower plate 318 has a radial slot 334 containing a lower dog plate 338. A pin 340 connects the upper dog plate 336 to the lower dog plate 338 through a bore in the disk 316. An alignment hole 342 passes through the plates 314 and 318, and disk 316. During factory assembly, a pin placed in the hole 342 maintaining alignment within the corrector 300 while it is being installed. When in the shifting position the pin 340 must be at 90° to a plane passing through the centerline of shafts 304 and 326. (90° to the position shown in Fig. 9 or perpendicular to the plane of the paper).

When installed in the steering and drive system 201, the eccentric shaft 302 is fixed to the dolly chassis 104 by screw fasteners passing through the dolly chassis 104 into the threaded bores 306 and 330. As the dolly is steered in the conventional steering mode, belt 216 turns the top sprocket 312 on the shaft 302 as shown in Figs. 2 and 9. The first sprocket 312 is linked to the second sprocket 320 through the interaction of the disk 316 and the interlinked sliding dogs 336 and 338. The geometry of the corrector 300 causes the second sprocket 320 to turn through a "corrected angle" with respect to the first sprocket 312. Correspondingly, the second sprocket 320 drives the right side conventional steering belt 242, thereby driving the sprockets in the right rear leg 112 and causing the right rear wheels to be steered to the proper conventional steering angle. The corrector 300 operates continuously, i.e., it sets very accurate corrected steering regardless of wheel position. If the steering wheel 252 is turned 180°, 360° or through any angle, the corrector 300 uniformly maintains the appropriate conventional steering angles. In addition, testing shows the correction provided by the corrector 300 to be so accurate (in the straight ahead leg configuration and 3-point configuration) that any "misalignment" of the rear wheels in conventional steering is so slight as to be beyond human perception.

In Fig. 10, 402 represents the axis of the first section 304, 404 represents the axis of the central section 324, and 406 represents the axis of the second section 326 of the shaft 302. 408 is shown 90° to the alignment position. With the sprockets and disk oriented to the position 410 in Fig. 10, there is 0 correction, i.e. the wheels are straight ahead (the shifting position). Positions P1-P8 in Fig. 10 corresponds to the angular movements shown in Fig. 12A and 12B.

Referring to Fig. 12A, the correspondence of the centers of rotation 406, 404 and 402 are graphically represented. The arc 420 sweeps through 214.238°, i.e., this is the angle of rotation of the top sprocket 312 about its center of rotation 402, at maximum correction. This corresponds to a king pin angle of rotation of the wheels of 107.10°, due to the 2:1 ratio of the sprocket sizes between the corrected sprockets and the conventional steering sprockets 186 and 187. The lower sprocket 320 which rotates about axis 406, for the same movement, sweeps through arc 422 comprising an angle of 145.093°, again from start or 0 correction to maximum correction. This movement of the lower sprocket 320 turns the right rear wheels to an angle of 72.90°, again one half of the amount of rotation of the sprocket 320 due to the sprocket drive ratios. These numbers correspond to a corrector offset of .231 in. Other offset values can be selected for various wheel base combinations. Fig. 12B also shows the relationships of the intermediate wheel positions designated in Figs. 10 and 12A. Of course, the corrector 300 operates continuously to correct steering regardless of the increments shown or steering angle. The angles selected in Figs. 8 and 12 are examples selected for illustration purposes.

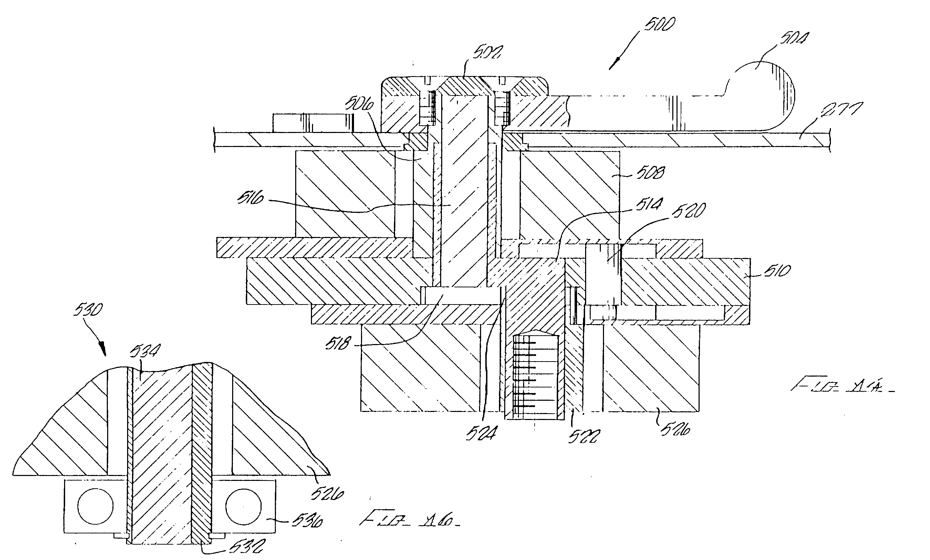

The corrector 300 shown in Fig. 9 does not provide exact correction for conventional steering when the legs are in the track position. Shown in Fig. 13 is an alternative embodiment of the corrector 300 which is adjustable to provide proper steering correction for all leg configurations. Referring to Fig. 13, an adjustable steering corrector 440 has a knob 442 on top of the dolly chassis. A shaft 446 has a first section 448, a central section 450 and a second section 452 offset from the central and first shaft sections. An eccentric drive collar 444 is rotatably mounted on the first shaft section 448. A central plate 454 is fixed to a floating hub 456 which is rotatably mounted onto the central shaft section 450. A top sprocket 458 is rotatably positioned over the eccentric drive collar 444. A bottom sprocket 460 is rotatably mounted on the lower shaft section 452. Upper and lower spacers 464 and 462 secure the corrector 440 within the dolly chassis. A pin 465 interconnects sliding dogs 466 and 468 which are radially slidable in slots in the plate sections 470 and 472 of the upper and lower sprockets 458 and 460. A collar pin 474 extends from the eccentric drive collar 444 into the floating hub 456. By turning the knob 442, the amount of offset between the axis of rotation of the sprockets 458 and 460 is changed from an amount suitable for correcting steering in the 3-point simulation and straight ahead positions, to correcting steering for the track position. Accordingly, proper steering correction can be implemented in any of the three dolly leg cotnfigurations by turning the knob 442 on the corrector 440 to select the appropriate selection mode of the corrector 440.

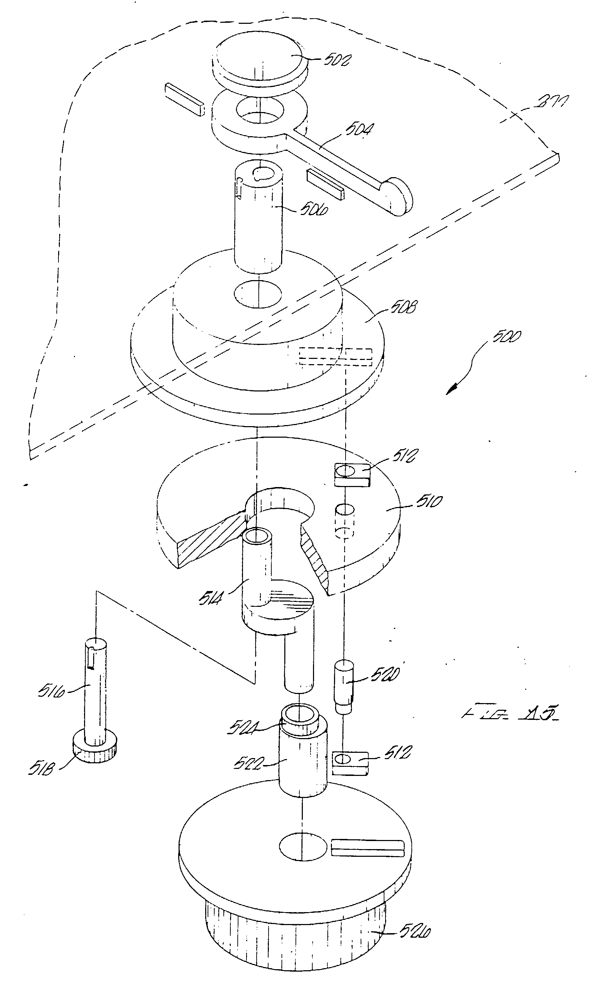

Another adjustable steering corrector 500 according to the invention is shown in Figs. 14 and 15. The top cap 502 and hand lever 504 of the steering corrector 500 are above the top deck 277 of the dolly chassis. The hand lever 504 is pinned to a top cam 506 which passes through a top sprocket 508 on a hub 514. A gear post 516 having a spur gear 518 at its lower end passes through the hollow hub 514 and is attached to and turns with the lever 504 and top cam 506. A bottom cam 522 has a spur gear 524 attached at its upper end. The bottom cam 522 is positioned within a lower sprocket 526 on the hub 514. The steering corrector 500 has a disc 510 and sliding dogs 512 connected by a pin 520, similar to the correctors shown in Figs. 9 and 13. The principle of operation of the corrector 500 is also similar to the operation of the correctors shown in Figs. 9 and 13. However, in contrast to the adjustable corrector 440 shown in Fig. 13, the corrector 500 shown in Figs. 14 and 15, by virtue of the cam and spur gear arrangement, achieves twice the offset since movement of the hand lever 504 causes both the top sprocket 508 and the lower sprocket 526 to move apart. This provides for a wider range of steering correction geometry within a compact size. In the preferred embodiment, corrector 500 corrects the offsets from .204 in. (0.518 cm) to .310 in. (0.787 cm) (axle centerline separation is .408 in. (1.036 cm) to .620 in. (1.575 cm))

Fig. 16 shows a steering corrector 530 identical to the steering corrector 500 in Fig. 14, except for the design and mounting of the lower end. As shown in Fig. 16, steering corrector 530 has an extended bottom cam 532 and extended hub 534, with the extended bottom cam 532 secured within a bearing 536. The bearing 536 is rigidly mounted within the dolly chassis. As the lever 504 on the steering corrector 530 is shifted, there is no shifting of the lower sprocket 526. All movement due to the cam action occurs at the upper end of the transmission 530. The chassis top deck surrounding the transmission 530 is slotted (.212 in. in the preferred design). A bushing having a square outside shape is provided around the transmission 530 to guide the upper end of the transmission in the slotted chassis deck.

As shown in Fig. 1, the camera dolly 102 has steerable front wheels 120A and back wheels 120B. In Fig. 2, all four sets of wheels (and the legs as well as drawn in solid lines) are in the "straight ahead" position corresponding to wheel angles of 0° or 180°.

In the conventional steering mode, the front wheels 120A are secured in a straight ahead (0° or 180°) position, while the back wheels 120B are steered with the steering wheel 252. In crab steering mode, both the front wheels and back wheels are steered at the same angle, such that the camera support dolly can be steered and pushed laterally to the side, front or back, or at any desired angle, without changing the orientation of the camera 50.

Referring to Fig. 1, to use the crab and conventional steering shift rocker 272, the dolly operator or grip must physically depress either pedal with a hand or foot. When the steering system 201 of the camera dolly is to be shifted between crab and conventional steering, while the dolly is moving during a filming sequence, it can be difficult for the grip to actuate either steering shift pedal while simultaneously smoothly pushing or keeping up with the moving camera dolly. In addition, the steering system 201 can only be shifted between crab and conventional steering when the front and rear wheels are in the straight ahead (0° or 180°) position. This makes the dolly grip's objective of smoothly shifting the moving dolly between steering modes more difficult.

The front sets of wheels will always be properly aligned for shifting since in crab mode their steering angle always matches that of the rear wheels. Thus, when the rear wheels are straight ahead, the front wheels will also be positioned straight ahead. In conventional steering mode, the front wheels are always aligned straight ahead.

## Claims

1. A steering compensator (300;440;500) comprising:
a shaft (302;446;514) having a first shaft section (304;448), a central shaft section (324;450) offset from the first shaft section and a second shaft section (326;452) offset from the first and central shaft sections;
a first drive member (312;458;508) rotatably attached to the first shaft section (302;448);
a second drive member (320;460;526) rotatably attached to the second shaft section (326;452) ;
a central member (316;454;510) rotatably attached to the central shaft section (324;450) between the first and second drive members (312,320;458,460;508, 526); and
means (336,338,340;464,466,468;512;520) for pivotally linking said first and second drive members (312,320;458,460;508,526) to allow relative angular displacement between them.

2. The steering compensator of claim 1, wherein said first and second drive members (312,320;458,460) are of approximately equal diameters.

3. The steering compensator of claim 1 or 2, further comprising a first drive member plate (314;470) joined to the first drive member (312;458) and a second drive member plate (318;472) joined to the second drive member (316;454).

4. The steering compensator of claim 3, wherein said means for pivotally linking comprises a pin (340;464;520) extending from a first slide block (336;468;512) radially slidable in a groove (332) in the first drive member plate (314;470), through a bore in the central member (316;454;510) and connecting to a second slide block (338;466;512) radially slidable in a groove (332) in the second drive member plate (318;472).

5. The steering compensator of claim 3 or 4, wherein the central member is a disk (316;454;510) having a diameter approximately equal to the diameter of the first and second plates (314,318;470,472).

6. The steering compensator of any one of the preceding claims, wherein the first drive member and the second drive member are sprockets (312,320;458,460;508, 526).

7. The steering compensator of any preceding claim, wherein the first and second drive members (312,320) are attached to the shaft with snap rings (305).

8. The steering compensator of any preceding claim, further comprising an adjustable angle correction feature, having:
an eccentric collar (444) rotatably supported on the first shaft section (450), with the first drive member (458) rotatably supported around the eccentric collar (444);
a hub (456) rotatably supported on the central section (450); and
a link (474) between the eccentric collar (444) and the hub (456).

9. The steering compensator of claim 8, further comprising a central plate (440) fixed to the hub (456).

10. The steering compensator of claim 8 or 9, further comprising a knob (442) attached to the eccentric collar (444).

11. The steering compensator of claim 10, further comprising a dolly top deck (277) and wherein the knob (442) is positioned over the dolly top deck.

12. A steering wheel angle corrector comprising:
an offset hub (514) having a first leg joined to a first side of a centre section and a second leg joined to a second side of the centre section opposite the first side and offset from the first leg;
a first cam (506) pivotally supported about the first leg of the offset hub (514);
a second cam (522) pivotally supported about the second leg of the offset hub (514);
a first sprocket (508) supported on the first cam (506);
a second sprocket (526) supported on the second cam (522)
a disk (510) rotatably supported about the centre section of the offset hub (514) in between the first and second sprockets (508,526);
a link (520) slidably extending between the first and second sprockets (508,526) and through the disk (510);
a gear post (516) having a first end and a second end extending through the first leg of the offset hub (514);
a means (504) for turning the gear post, disposed on the first end of the gear post;
a first gear (518) on the second end of the gear post; and
a second gear (524) on the second cam (522) engaged with the first gear (518), such that movement of the means (504) for turning causes the first cam (506) to turn and the second cam (522) to turn simultaneously by an equal amount in an opposite direction.

13. A camera dolly (100) including a steering compensator according to any one of claims 1 to 11 or a steering corrector according to claim 12.

## Patentansprüche

1. Steuerungskompensator (300, 440, 500), umfassend:
eine Welle (302, 446, 514) mit einem ersten Wellenabschnitt (304, 448), einem gegenüber dem ersten Wellenabschnitt versetzten mittleren Wellenabschnitt (324, 450) und einen gegenüber dem ersten und dem mittleren Wellenabschnitt versetzten zweiten Wellenabschnitt (326, 452),
ein erstes, drehbar an dem ersten Wellenabschnitt (304, 448) befestigtes Antriebsbauteil (312, 458, 508),
ein zweites, drehbar an dem zweiten Wellenabschnitt (326, 452) befestigtes Antriebsbauteil (320, 460, 526),
ein mittleres, zwischen den ersten und zweiten Antriebsbauteilen (312, 320, 458; 460, 508, 526) drehbar an dem mittleren Wellenabschnitt (324, 450) befestigtes Bauteil (316, 454, 510), und
Mittel (336, 338, 340; 464, 466, 468; 512, 520) zum schwenkbaren Verbinden dieser ersten und zweiten Antriebsbauteile (312, 320; 458, 460; 508, 526), um eine relative Winkelbewegung zwischen diesen zuzulassen.

2. Steuerungskompensator nach Anspruch 1, dadurch gekennzeichnet, daß die ersten und zweiten Antriebsbauteile (312, 320; 458, 460) annähernd gleiche Durchmesser haben.

3. Steuerungskompensator nach Anspruch 1 oder 2, dadurch gekennzeichnet, daß er eine mit dem ersten Antriebsbauteil (312, 458) verbundene erste Antriebsbauteilplatte (314, 470) und eine mit dem zweiten Antriebsbauteil (316, 454) verbundene zweite Antriebsbauteilplatte (318, 472) aufweist.

4. Steuerungskompensator nach Anspruch 3, dadurch gekennzeichnet, daß das Mittel zum schwenkbaren Verbinden einen Stift (340, 464, 520) umfaßt, der sich von einem ersten Gleitblock (336, 468, 512), der in einer Rille (332) in der ersten Antriebsbauteilplatte (314, 470) radial verschieblich ist, durch eine Bohrung in dem mittleren Bauteil (316, 454, 510) erstreckt und mit einem zweiten, in einer Rille (332) in der zweiten Antriebsbauteilplatte (318, 472) radial verschieblichen Gleitblock (338, 466, 512) verbunden ist.

5. Steuerungskompensator nach Anspruch 3 oder 4, dadurch gekennzeichnet, daß das mittlere Bauteil eine Scheibe (316, 454, 510) mit einem Durchmesser ist, der annähernd gleich dem der Durchmesser der ersten und zweiten Platten (314, 318; 470, 472) ist.

6. Steuerungskompensator nach einem der vorhergehenden Ansprüche, dadurch gekennzeichnet, daß das erste Antriebsbauteil und das zweite Antriebsbauteil Ritzel (312, 320; 458, 460; 508, 526) sind.

7. Steuerungskompensator nach einem der vorhergehenden Ansprüche, dadurch gekennzeichnet, daß die ersten und zweiten Antriebsbauteile (312, 320) mit Schnappringen (305) an der Welle befestigt sind.

8. Steuerungskompensator nach einem der vorhergehenden Ansprüche, dadurch gekennzeichnet, daß er eine einstellbare Winkelausgleichseinrichtung aufweist mit:
einem drehbar auf dem ersten Wellenabschnitt (448) gelagerten exzentrischen Kragen (444), wobei das erste Antriebsbauteil (458) drehbar um den exzentrischen Kragen (444) gelagert ist,
eine drehbar auf dem mittleren Abschnitt (450) gelagerte Nabe (456) und
einen Verbinder (474) zwischen dem exzentrischen Kragen (444) und der Nabe (456).

9. Steuerungskompensator nach Anspruch 8, dadurch gekennzeichnet, daß er eine an der Nabe (456) befestigte mittlere Platte (440) umfaßt.

10. Steuerungskompensator nach Anspruch 8 oder 9, dadurch gekennzeichnet, daß er einen an dem exzentrischen Kragen (444) angebrachten Knopf (442) umfaßt.

11. Steuerungskompensator nach Anspruch 10, dadurch gekennzeichnet, daß er eine Dolly-Oberplatte (277) umfaßt, und daß der Knopf (442) oberhalb der Dolly-Oberplatte angeordnet ist.

12. Steuerrad-Winkelausgleicher, umfassend:
eine Versatznabe (514) mit einem ersten Bein, das mit einer ersten Seite eines mittleren Abschnitts verbunden ist und einem zweiten Bein, das mit einer zweiten Seite des mittleren Abschnittes gegenüber der ersten Seite verbunden und gegen das erste Bein versetzt ist,
einen ersten, um das erste Bein der Versatznabe (514) drehbar gelagerten Nocken (506),
einen zweiten, um das zweite Bein der Versatznabe (514) drehbar gelagerten Nocken (522),
ein erstes, auf dem ersten Nocken (506) gelagertes Ritzel (508),
ein zweites, auf dem zweiten Nocken (522) gelagertes Ritzel (526),
eine Scheibe (510), die zwischen den ersten und zweiten Ritzeln (508, 526) drehbar um den mittleren Abschnitt der Versatznabe (514) gelagert ist,
einen Verbinder (520), der sich verschieblich zwischen den ersten und zweiten Ritzeln (508, 526) und durch die Scheibe (510) erstreckt,
eine Getriebesäule (516) mit einem ersten Ende und einem sich durch das erste Bein der Versatznabe (514) erstreckenden zweiten Ende,
ein auf dem ersten Ende der Getriebesäule angeordnetes Mittel (504) zum Drehen der Getriebesäule,
ein erstes Zahnrad (518) auf dem zweiten Ende der Getriebesäule (516), und
ein zweites Zahnrad (524) auf dem zweiten Nocken (522), das in Eingriff mit dem ersten Zahnrad (518) steht, so daß eine Bewegung des Mittels (504) zum Drehen bewirkt, daß sich der erste Nocken (506) dreht und sich der zweite Nocken (522) gleichzeitig um den gleichen Betrag in eine entgegengesetzte Richtung dreht.

13. Kameradolly (100), umfassend einen Steuerungskompensator nach einem der Ansprüche 1 bis 11 oder einen Steuerungsausgleicher nach Anspruch 12.

## Revendications

1. Compensateur de guidage (300 ; 440 ; 500) comportant :
un arbre (302 ; 446 ; 514) ayant un premier tronçon d'arbre (304 ; 448), un tronçon d'arbre central (324 ; 450) décalé du premier tronçon d'arbre, et un second tronçon d'arbre (326 ; 452) décalé du premier tronçon d'arbre et du tronçon d'arbre central ;
un premier élément d'entraînement (312 ; 458 ; 508) fixé de manière rotative sur le premier tronçon d'arbre (302 ; 448) ;
un second élément d'entraînement (320 ; 460 ; 526) fixé de manière rotative sur le second tronçon d'arbre (326 ; 452) ;
un élément central (316 ; 454 ; 510) fixé de manière rotative sur le tronçon d'arbre central (324 ; 450) entre les premier et second éléments d'entraînement (312, 320 ; 458, 460 ; 508, 526) ; et
des moyens (336, 338, 340 ; 464, 466, 468 ; 512 ; 520) pour relier de manière pivotante lesdits premier et second éléments d'entraînement (312, 320 ; 458, 460 ; 508, 526) pour permettre un déplacement angulaire relatif entre eux.

2. Compensateur de guidage selon la revendication 1, dans lequel lesdits premier et second éléments d'entraînement (312, 320 ; 458, 460) ont des diamètres approximativement égaux.

3. Compensateur de guidage selon la revendication 1 ou 2, comportant de plus une première plaque d'élément d'entraînement (314 ; 470) reliée au premier élément d'entraînement (312 ; 458) et une seconde plaque d'élément d'entraînement (318 ; 472) reliée au second élément d'entraînement (316 ; 454).

4. Compensateur de guidage selon la revendication 3, dans lequel lesdits moyens pour relier de manière pivotante comportent un ergot (340 ; 464 ; 520) s'étendant à partir d'un premier bloc de coulisseau (336 ; 468 ; 512) pouvant coulisser radialement dans une gorge (332) de la première plaque d'élément d'entraînement (314 ; 470), à travers un alésage de l'élément central (316 ; 454 ; 510) et relié à un second bloc de coulisseau (338 ; 466 ; 512) pouvant coulisser radialement dans une gorge (332) de la seconde plaque d'élément d'entraînement (318 ; 472).

5. Compensateur de guidage selon la revendication 3 ou 4, dans lequel l'élément central est un disque (316 ; 454 ; 510) ayant un diamètre approximativement égal au diamètre des première et seconde plaques (314, 318 ; 470, 472).

6. Compensateur de guidage selon l'une quelconque des revendications précédentes, dans lequel le premier élément d'entraînement et le second élément d'entraînement sont des roues dentées (312, 320 ; 458, 460 ; 508, 526).

7. Compensateur de guidage selon l'une quelconque des revendications précédentes, dans lequel les premier et second éléments d'entraînement (312, 320) sont fixés sur l'arbre à l'aide d'anneaux d'encliquetage (305).

8. Compensateur de guidage selon l'une quelconque des revendications précédentes, comportant de plus une caractéristique de correction d'angle réglable, comportant :
un collier excentré (444) supporté de manière rotative sur le premier tronçon d'arbre (450), le premier élément d'entraînement (458) étant supporté de manière rotative autour du collier excentré (444) ;
un moyeu (456) supporté de manière rotative sur le tronçon central (450) ; et
une liaison (474) entre le collier excentré (444) et le moyeu (456).

9. Compensateur de guidage selon la revendication 8, comportant de plus une plaque centrale (440) fixée sur le moyeu (456).

10. Compensateur de guidage selon la revendication 8 ou 9, comportant de plus un bouton (442) fixé sur le collier excentré (444).

11. Compensateur de guidage selon la revendication 10, comportant de plus un plateau supérieur de chariot (277), et dans lequel le bouton (442) est positionné sur le plateau supérieur de chariot.

12. Correcteur d'angle de roue de guidage comportant :
un moyeu décalé (514) ayant une première patte reliée à un premier côté d'un tronçon central et une seconde patte reliée à un second côté du tronçon central opposé au premier côté et décalée de la première patte ;
une première came (506) supportée de manière pivotante autour de la première patte du moyeu décalé (514) ;
une seconde came (522) supportée de manière pivotante autour de la seconde patte de moyeu décalé (514) ;
une première roue dentée (508) supportée sur la première came (506) ;
une seconde roue dentée (526) supportée sur la seconde came (522)
un disque (510) supporté de manière rotative autour du tronçon central du moyeu décalé (514) entre les première et seconde roues dentées (508, 526) ;
une liaison (520) s'étendant de manière coulissante entre les première et seconde roues dentées (508, 526) et à travers le disque (510) ;
un montant d'engrenage (516) ayant une première extrémité et une seconde extrémité s'étendant à travers la première patte du moyeu décalé (514) ;
des moyens (504) pour faire tourner le montant d'engrenage, agencés sur la première extrémité du montant d'engrenage ;
un premier engrenage (518) situé sur la seconde extrémité du montant d'engrenage ; et
un second engrenage (524) situé sur la seconde came (522) en prise avec le premier engrenage (518), de telle sorte que le déplacement des moyens (504) pour faire tourner entraîne la première came (506) à tourner et la seconde came (522) à tourner simultanément d'une quantité égale dans une direction opposée.

13. Chariot de caméra (100) comportant un compensateur de guidage selon l'une quelconque des revendications 1 à 11 ou un correcteur de guidage selon la revendication 12.
